# EUROPEAN PATENT SPECIFICATION

(11) **EP 2 223 165 B1**
(45) Date of publication and mention of the grant of the patent: **16.10.2013**
(21) Application number: 08851146.4
(22) Date of filing: 17.11.2008
(51) Int. Cl.: G01V 5/00, G01T 1/167

(54) **MULTIPLE IMAGE COLLECTION AND SYNTHESIS FOR PERSONNEL SCREENING**
MEHRBILDSAMMLUNG UND SYNTHESE FÜR DIE PERSONALÜBERPRÜFUNG
COLLECTE ET SYNTHÈSE D'IMAGES MULTIPLES POUR UNE SÉLECTION DE PERSONNEL

(30) Priority: 19.11.2007 US 988933 P
(43) Date of publication of application: 01.09.2010
(73) Proprietor: American Science & Engineering, Inc., Billerica, MA 01821 (US)
(72) Inventor: MASTRONARDI, Richard, Medfield MA 02052 (US); FLEURY, Dean, Littleton MA 01460 (US); SCHUBERT, Jeffrey, R., Somerville MA 02143 (US); DIMARE, Joseph, Wakefield MA 01880 (US); SCHUELLER, Richard, Chelmsford MA 01824 (US); CHALMERS, Alexander, Norwood MA 02062 (US)
(74) Representative: Finnie, Peter John
(86) International application number: PCT/US2008/083741
(87) International publication number: WO 2009/067394

(56) References cited:
- EP-A- 1 168 249
- WO-A-01/59485
- WO-A-99/13323
- GB-A- 1 505 498
- JP-A- 62 147 349
- US-A- 3 780 291
- US-A- 3 971 948
- US-A- 4 692 937
- US-A- 5 181 234
- US-A1- 2004 057 554
- US-A1- 2007 258 562
- US-B1- 6 421 420
- US-B1- 6 785 360

## Description

### Cross Reference to Related Applications

The present application claims priority to US Provisional Application No. 60/988,933, filed November 19, 2007.

### Technical Field and Background Art

The present invention relates to the field of x-ray imaging of personnel, packages, or other subjects to detect concealed objects.

Current personnel screening systems using backscatter and millimeter wave technology can provide images representative of the surface of the scanned subject, but, insofar as they may well not penetrate the entirety of the scanned subject, they lack the capability to image items of interest located on the far side of the subject, or items of interest that return a signal response similar to the background surrounding the subject, or items artfully concealed on the subject.

EP1168249A describes a radiographic imaging method and device for three dimensional reconstruction with low dose of radiation. The data to reconstruct the three dimensional model of a human skeleton is obtained by simultaneously gathering two images taken from perpendicular views scanning vertically over the required distance along the skeleton.

GB1505498 describes an x-ray apparatus for providing an x-ray image of a section of a body, comprising two x-ray sources and two x-ray detectors arranged in the plane of the section, each source being arranged adjacent a detector and opposite the other source and detector so that the body may be arranged there between. Means for moving the sources and detectors in the plane with respect to the body are provided.

WO99/13323 describes a tomographic inspection system comprising a support including a source and a collimator adapted to produce 2 pencil beams of X-Rays incident on an object, where an actuator displaces the object with respect to the carriage, and detectors for receiving radiation produced by the source and after backscattering of the radiation by the object.

US6785360 describes a personnel inspection system comprising a support including a source adapted to produce a fan-beam of X-Rays incident on a person, where the fanbeam is scanned over the person, and detectors for receiving radiation produced by the source and after backscattering of the radiation by the object.

US5181234 describes an X-Ray backscatter detection system comprising a carriage including a source and a collimator adapted to produce a pencil beam of penetrating X-Ray radiation incident on a person; an actuator adapted to displace the carriage with respect to the person in a direction having a vertical component, and a detector for receiving radiation produced by the source after backscattering of the radiation by the person.

In an attempt to increase the detection accuracy of such screening systems, additional scans are required that might further necessitate repositioning the subject to be scanned. These additional scanning requirements, while possibly increasing detection accuracy, significantly reduce the rate of throughput of such systems that are generally implemented under circumstances that experience large volumes of scanning.

A system that provides both accurate and effective imaging at a high throughput rate and requires inspected subjects to be exposed to only a low dose of radiation is particularly desirable in such applications.

Accordingly, the present invention is directed toward providing an apparatus and method of scanning that can achieve these desired objectives.

### Summary of the Invention

In accordance with an aspect of the present invention an apparatus is provided that ascertains a material feature associated with a subject, and in certain embodiments, generates one or more images of the subject. The apparatus includes a first carriage, a second carriage, and at least one actuator. Each carriage includes a source including a collimator that is adapted to produce a pencil beam of penetrating x-ray radiation incident on the subject. The actuator is adapted to displace each carriage in such a manner as to move the pencil beam with respect to the subject in a direction having a vertical component. The apparatus further comprises at least one detector for receiving radiation produced by the source on the first carriage after backscattering of the radiation by the subject and at least one other detector for receiving radiation produced by the source on the second carriage after backscattering of the radiation by the subject.

The actuator may be adapted to synchronously displace each carriage.

At least a first detector of the at least one detector may be disposed on the first carriage. At least a detector of the at least one other detector may be disposed on the second carriage. The subject may be a person.

Each source may also have a scanner adapted to move the beam of penetrating radiation produced by the source transverse to the direction of motion of the carriages. Each scanner may be in the form of a chopper wheel and may be adapted to provide interleaved beams.

Each carriage may include a plurality of detectors. Each plurality of detectors may include at least one of a scatter and transmission detector.

The first and second carriages may produce substantially oppositely directed beams of penetrating radiation.

The transmission detector of the first carriage may be disposed at an elevation substantially equal to that of the source of the second carriage.

In one embodiment of the present invention the first and second carriages may be structurally coupled. Both carriages may be coupled to a single mechanical platform wherein the at least one positioner is adapted to move the single mechanical platform in a direction having a vertical component.

In another embodiment of the present invention each source may be an intermittently irradiating source providing a temporally interlaced irradiation pattern.

An embodiment of the present invention may include a displacement encoder.

The positioner of the apparatus may include at least one of a rotary motor coupled to a lead screw, a rack and pinion system, an electromechanically propelled system, a hydraulic piston or a pulley system in accordance with an embodiment of the present invention.

The apparatus may include a processor for receiving a signal from the at least one detector and for producing an image based at least on the signal and may further include a processor for electronically combining the images produced by each detector in one embodiment.

In accordance with a related embodiment of the present invention the apparatus may include an enclosure for containing the carriages and the at least one actuator during the course of operation. At least one stationary detector may be coupled to the enclosure. The enclosure may be an environmentally controlled enclosure. The enclosure may be sealable from an external environment.

In an embodiment of the present invention each source may be a pulsed source adapted to intermittently irradiate the subject.

In accordance with another aspect of the present invention a method is provided for inspecting a subject. The method has steps of:
moving a first carriage, the first carriage having coupled to it a first source including a collimator adapted to produce a first pencil beam of penetrating radiation incident on the subject, the first carriage moved in such a manner as to scan the first pencil beam of penetrating radiation in a direction having a vertical component;
moving a second carriage, the second carriage having coupled to it a first source including a collimator adapted to produce a second pencil beam of penetrating radiation incident on the subject, the second carriage moved in such a manner as to scan the second pencil beam of penetrating radiation in a direction having a vertical component;
detecting with at least one detector radiation backscattered by the subject from the source on the first carriage and detecting with at least one other detector radiation backscattered by the subject from the source on the second carriage, and generating detector output signals based on radiation received by the at least one detector and the at least one other detector; and,
characterizing the subject on the basis of the detector output signals.

The act of moving the second carriage may be synchronous with the act of moving the first carriage.

At least a first detector of the at least one detector may be coupled to the first carriage. At least a detector of the at least one other detector may be coupled to the second carriage.

In another related embodiment the method further includes creating an image based on radiation detected by the first and second detectors.

In yet another related example the method include the steps of:
scanning the second pencil beam of penetrating radiation produced by the source coupled to the second carriage in a direction transverse to the direction of motion of the carriages,
generating detector output signals based on radiation received by the at least one detector and, if present, the at least one other detector; and
creating an image based on radiation detected from the first pencil beam and the second pencil beam.

In any of the described methods for inspecting a subject the subject may be a person.

### Brief Description of the Drawings

The present invention relates to the field of screening cargo or any other packages and/or subjects.

The foregoing features of the invention will be more readily understood by reference to the following detailed description taken with the accompanying drawings:
Fig. 1 is a schematic view of an embodiment of the present invention used to scan a person who has entered the imaging apparatus.
Figs. 2A and 2B are illustrations of a lead screw type positioner attached to a carriage of the current invention.
Fig. 3 is a top view of two sources and two chopper wheels configured such that the sources may alternately scan a subject in accordance with an embodiment of the present invention.
Fig. 4 illustrates an inspection system provided within an enclosure, in accordance with certain embodiments of the present invention.
Fig. 5 is a schematic depiction of a prior art x-ray source based on electron field emission.
Fig. 6 shows the use of a single-dimensional array of discrete sources in a backscatter imaging application, in accordance with an example of the present invention.
Fig. 7 shows the use of a two-dimensional array of discrete sources in a backscatter imaging application, in accordance with an example of the present invention.
Fig. 8 shows the use of a single-dimensional array of discrete sources and a fixed set of backscatter detectors in a backscatter imaging application, in accordance with an example of the present invention.
Fig. 9 shows an image generation apparatus in which multiple one-dimensional source arrays are mounted on a single cylinder, in accordance with an example of the present invention.
Fig. 10A shows a front view of an example of the present invention in which x-rays are emitted from above.
Fig. 10B shows a schematic side view of an example of the present invention, depicting a person at successive positions traversing a plurality of x-ray beams emitted from above.
Fig. 11A shows a front view of an example of the present invention in which x-rays are emitted from opposing sides.
Fig. 11B shows a schematic side view of an example of the present invention, depicting a person at successive positions traversing a plurality of x-ray beams emitted from above.
Fig. 12 shows a schematic cross sectional view of an x-ray inspection system that uses multiple backscatter imaging systems in accordance with embodiments of the present invention.
Fig. 13 shows a side view of the x-ray inspection system embodiments of Fig. 12.
Fig. 14 shows a prior art backscatter system employing an electromagnetic scanner of a sort employed in various embodiments of the present invention.

### Detailed Description of Preferred Embodiments

Definitions. As used in this description and the accompanying claims, the following terms shall have the meanings indicated, unless the context otherwise requires:
A "carriage" is a moveable system including a source and/or a detector of penetrating radiation. A carriage may include a detector that detects radiation; however, it is not required to.

A "vertical positioner" is a system component capable of displacing a carriage in a direction having a vertical component. A positioner may include an actuator, such as a motor, and attendant mechanical linkages or couplings.

A "vertically disposed array" is a plurality of objects, generally sources or detectors, disposed in a configuration having a vertical component such that at least one source in a vertically disposed array of sources is at a different elevation than at least one other source in the same vertically disposed array.

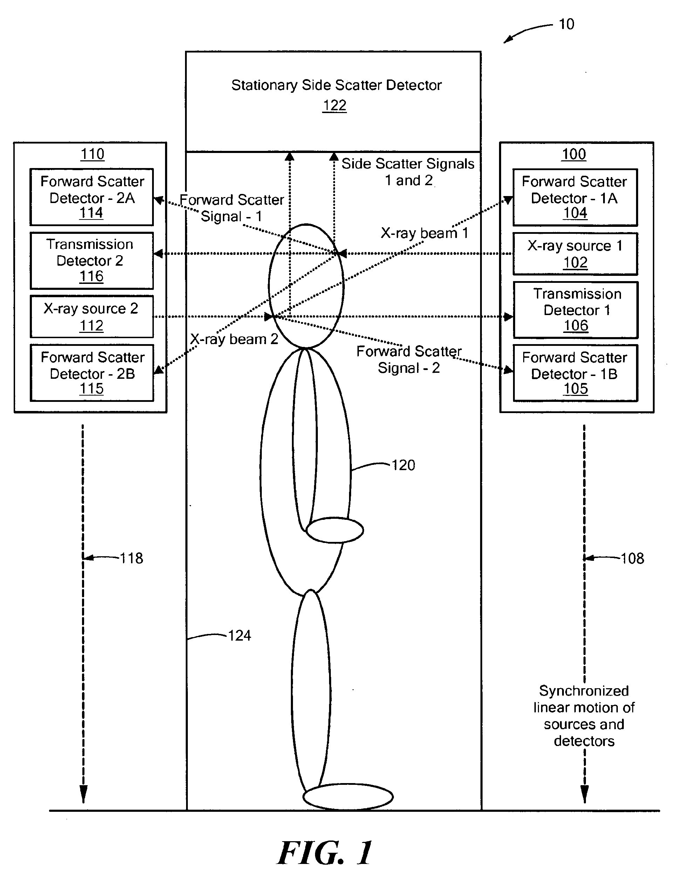

Fig. 1 is a schematic view of an embodiment of the present invention scanning a person who has entered a vicinity of the imaging apparatus. The imaging apparatus, illustrated in Fig. 1, and designated generally by numeral 10, uses two distinct sources that produce penetrating radiation so that the subject is scanned, in a single pass, and is imaged from two opposite sides, thereby enabling effective identification of any concealed objects. The penetrating radiation produced by each source is x-rays. The sources are distinct in that they allow a beam of penetrating radiation to be produced from each carriage to facilitate imaging the subject. Various images may be produced including images based on transmission and/or scatter radiation detected on either side and/or top of the subject. These images may be produced contemporaneously. The contemporaneously produced images may be combined using any processing methods. Source **102** of the apparatus is coupled to carriage **100**. Carriage **100** may include one or more detectors. Three detectors are shown for illustrative purposes. The three detectors illustrated include detector **104**, configurable for forward scatter detection, detector **106**, configurable for transmission detection, and detector **105**, also configurable for forward scatter detection. It will be appreciated by those of ordinary skill in the art that carriages are not limited to including three detectors or a specific type of detector. Particularly, each detector may be configured to detect more than one form of radiation. A carriage may include one or more detectors and any single detector on the carriage may be configured to serve as a forward scatter, transmission, or backscatter radiation detector.

Configuring a detector to sense a particular kind of radiation may be achieved by modifying the detectors output, detection period, and/or sensitivity level. For example, each detector may output detected information to a processor specifically configured to process the detected signal. Further, the processor configuration may alternate depending on what type of radiation is detected during any given time interval. The detectors may be configured, for example, so that during the course of the time interval during which source **102** is producing a beam of radiation, detectors **104**, **105**, and **106** are configured to detect backscatter radiation, detectors **114** and **115** are configured to detect forward scatter radiation, and detector **116** is configured to detect transmission radiation. In the same example the detectors may be configured such that during the course of another time interval, defined by source **112** producing a beam of radiation, detectors **114**, **115**, and **116** are configured to detect backscatter radiation, detectors **104** and **105** are configured to detect forward scatter radiation, and detector **106** is configured to detect transmission radiation. This is just a single example of how the detectors may be configured to operate and the configuration is amenable to the provided system components and particular application. As such, various configurations, which may not be explicitly described may be provided in accordance with embodiments of the present invention.

Carriage **110**, similar to carriage **100**, includes three detectors that are coupled to it. The three detectors coupled to carriage **110** include detector **114** configurable to detect forward scatter radiation, detector **116** configurable to detect transmission radiation, and detector **115** also configurable to detect forward scatter detection. These detectors, as those on carriage **100**, may each be configured, as discussed in the example above, to detect each type of radiation, including forward scatter, transmission, and/or backscatter radiation.

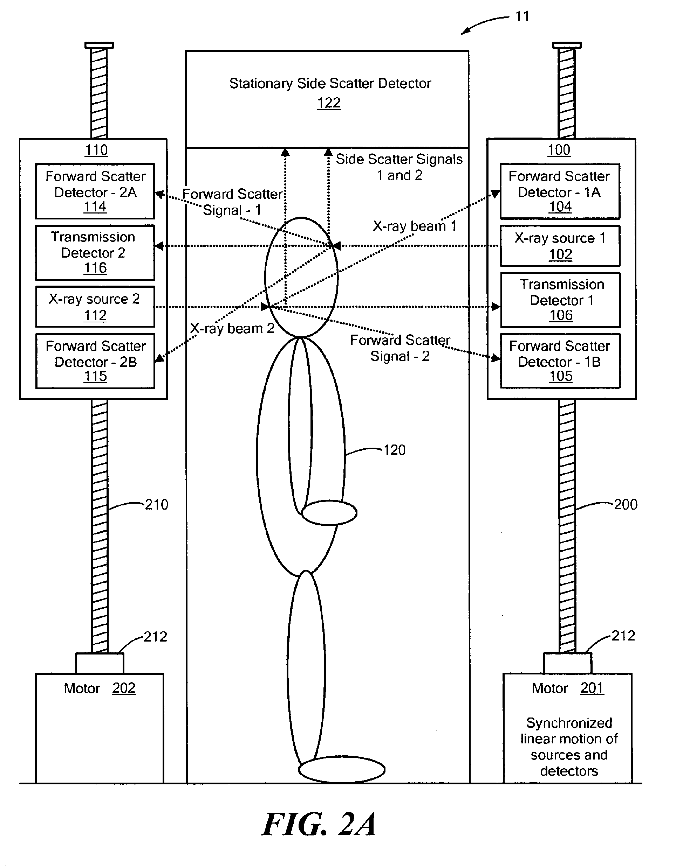

Carriages **100** and **110** are each maintained at substantially the same elevation throughout a scan. Carriages **100** and **110** are generally each coupled to separate vertical positioners that move the carriages along the trajectory illustrated by lines **108** and **118** respectively, as further illustrated in Fig. 2A. The positioners move the carriages in a generally vertical direction at the same rate such that the carriages maintain a substantially equivalent elevation relative to one another throughout the displacement of each carriage. The scanning system illustrated further includes a stationary side scatter detector **122** that detects radiation scattered approximately vertically during a scan.

As the source illustrated in Fig. 1 scans subject **120** horizontally, simultaneous to the carriages being displaced vertically in synchronization with one another, the radiation produced from a first source that is located on a first carriage may be detected, after interaction of the radiation with the subject, by detectors located on an opposing second carriage. Additionally, the radiation produced from a second source located on a second carriage may be detected, after interaction of the radiation with the subject, by detectors located on the opposing first carriage. The type of radiation detection may include transmission and or scatter detection. Although backscatter detectors are not expressly demonstrated on the carriages in Fig. 1, the carriages may include detectors configured to detect backscatter radiation. In an embodiment in which a detector is configured to detect backscatter radiation, the detector may detect radiation produced from a source located on the same carriage as the detector, as explained in the example above.

In a preferred embodiment the source of each carriage may be adapted to produce pencil beam x-rays. This may be achieved through the use of a collimator or by any means of producing a narrow beam of penetrating radiation. The source may be further adapted in a preferred embodiment to scan a subject in a direction transverse to the generally vertical direction of travel by the carriage. The scanning may be achieved using devices including, but not limited to, chopper wheels, electromagnetic steering devices, or any other scanning systems.

Fig. 1 also illustrates the relative positions of the detectors on one carriage with respect to the source on an alternative carriage, specifically for the configuration of sources and detectors demonstrated. In the embodiment illustrated in Fig. 1, each source is located at a position that corresponds to the height or elevation of the opposing detector that is configurable for transmission detection. Specifically, detector **116** of carriage **110** is at substantially the same elevation as source **102** on carriage **100** and vice versa for source **112** on carriage **110** and detector **106** on carriage **100**.

Two of the detectors configurable to detect forward scatter radiation on each carriage are disposed, in an embodiment, at a vertically offset distance from the corresponding source, such that the scattered radiation that results from the beam of penetrating radiation incident on the subject is detected. Although detector **106** may be configured to detect scatter radiation, detectors **104** and **105** may be more optimal than detector **106** at detecting forward scatter radiation resulting from the beam of source **112** interacting with a subject disposed between the carriages. Similarly, detector **116** may be configured to detect forward scatter radiation, but detectors **114** and **115** may be more optimal than detector **116** at detecting forward scatter radiation resulting from the beam produced by source **102** interacting with a subject due to the vertical offset of detectors **114** and **115** from source **102**.

To achieve coordinated motion of the carriages, structural coupling that allows the carriage to move as a single body may be provided.

In use, a subject enters a vicinity of the inspection system and then the carriages are displaced vertically as the subject is scanned from at least two sides in a single pass. As a new subject enters the portal for scanning, the carriages can begin scanning the subject from their current position as they are displaced vertically in the opposite direction of displacement performed in the previous scan. For example, one subject is scanned as the carriages are displaced in a vertical direction decreasing in elevation and after the scan is completed and the next subject enters, the next subject may be scanned as the carriages are displaced in a vertical direction increasing in elevation.

In another embodiment of the present invention each carriage may include a source without any detectors coupled to the moveable carriage. For example, carriages **100** and **110** may each be provided without any of detectors **104**, **105**, **106**, **114**, **115**, and **116**. In this example, stationary detectors may be provided that detect transmission and/or scatter radiation as the carriages are displaced and the sources alternate activation. The stationary detectors in this example may still be configurable. The stationary detectors may also be provided, for example, in an array that extends approximately the length of travel of the carriages, thereby allowing them to detect radiation similar to the detectors attached to the carriages illustrated in Fig. 1.

Fig. 2A is an illustration of a lead screw type positioner attached to a carriage of the current invention. The imaging apparatus illustrated in Fig. 2A, designated generally by numeral **11** shows lead screws **200** and **210** coupled to carriages **100** and **110** such that as the rotary lead screw motors **201** and **202**, here serving as the positioners, are operated simultaneously, carriages **100** and **110** move in a generally vertical direction along the axis of rotation of their respective lead screws. This figure illustrates one type of positioner that may be implemented with carriages of the current invention to achieve the necessary displacement; however, embodiments of the present invention may incorporate other systems that can be used to achieve displacement of the carriages. These systems may include, but are not limited to, a rack and pinion system, an electro-mechanical system, which may use electro-magnetism propulsion, a hydraulic system, or a pulley system. The invention also contemplates displacing the carriages by a single positioner that is coupled to the carriages. The positioner may include a single positioner having a mechanical platform coupled to more than one carriage. The positioner may, alternatively or additionally, include a system that allows motion of the carriage or carriages in a direction or directions other than a vertical direction. Any of the systems described, or any other positioner used, may be commanded by a controller that includes a displacement encoder **212** to provide displacement of the carriages to a specified position or over a specified displacement. The controller might further command the rate at which the displacement is achieved or any other relevant variables pertaining to carriage movement.

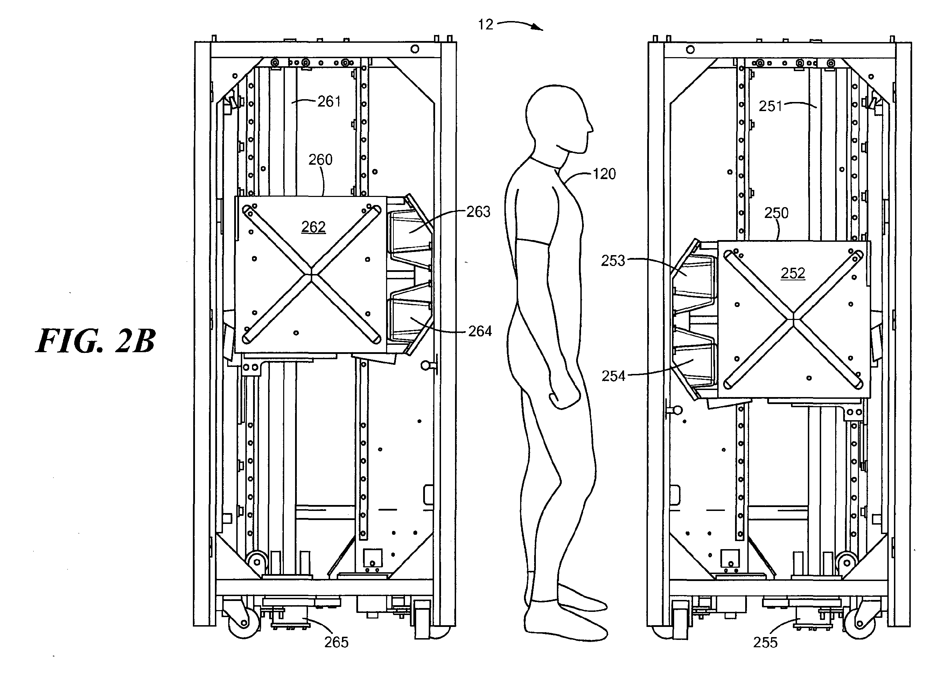

Fig. 2B is a profile view of an embodiment of the present invention used to scan a person who has entered the imaging apparatus. As previously indicated, the sources may be offset from one another such that each source is located at a position that corresponds to the height or elevation of the opposing detector that is configurable for the required type of detection. For example, a detector configurable for transmission detection being located at a vertical height on one carriage that is commensurate with the source located on an oppositely disposed carriage. The imaging apparatus, designated generally by numeral **12** in Fig 2B shows that offsetting the sources, here source **252** and source **262**, may be achieved by offsetting the corresponding carriages, here carriages **250** and **260**. For example if the carriages were similarly configured with the source centrally located and producing a beam of penetrating radiation from a central location on the carriage, each carriage could be coupled to the respective positioner at an elevation whereby one carriage is vertically offset from the other carriage such that the respective source of each carriage is vertically offset with respect to the source of the other carriage. This setup still effectuates the use of configurable detectors as previously discussed. Particularly, during the time interval when source **252** is activated detectors **253** and **254** may be configured to detect backscatter radiation, detector **264** may be configured to detect transmission radiation, and detector **263** may be configured to detect forward scatter radiation. Further, during the timer interval when source **262** is activated detectors **263** and **264** may be configured to detect backscatter radiation, detector **253** may be configured to detect transmission radiation, and detector **254** may be configured to detect forward scatter radiation.

Fig. 2B further illustrates lead screws **251** and **261** that provide carriages **250** and **260** with motion in a generally vertical direction as the lead screws are rotated by motors **255** and **265**.

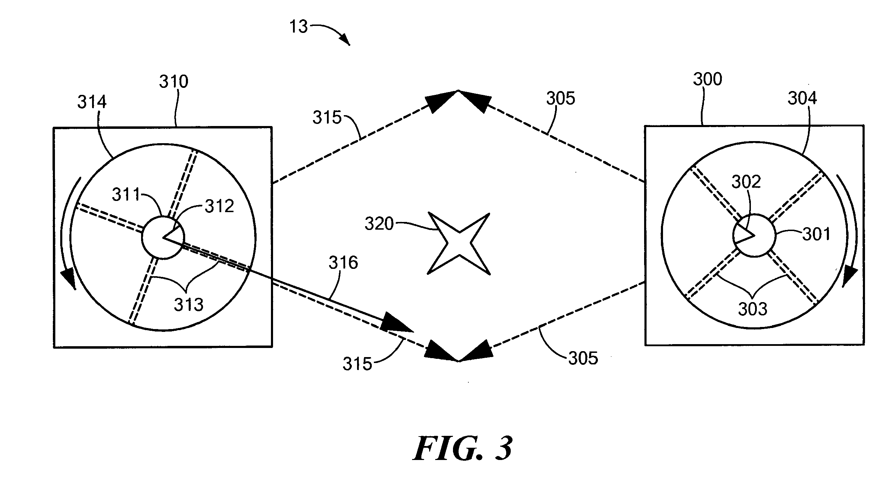

Fig. 3 is a top view of two sources with chopper wheels configured such that the sources may alternate producing radiation that is incident on the subject. The imaging apparatus is designated in Fig. 3 by numeral **13**. The invention encompasses adapting the sources to produce radiation incident on the subject at distinct time intervals. This may be achieved with a steady state transmitting source or with a pulsed source that transmits radiation during distinct time intervals. In the event that a steady state transmitting source is used, the source may be provided with a chopper wheel that has one-half the normal number of slits, for example. The apparatus will thus be provided with a controller adapted to synchronize the sources irradiation of a subject such that the sources alternate producing radiation incident on the subject during specified time intervals in order to achieve full width scans on both sides of the subject, simultaneous to the carriages being disposed in synchronization in a generally vertical direction, by the positioners or positioner.

In Fig. 3, a first and second carriage **300** and **310** are shown from a top view. The carriages each illustrate a source **301** and **311** producing penetrating radiation **302** and **312**. The penetrating radiation may be produced in a range dictated by the source used, and is not intended to be limited by the illustration. The range of the source is determinative of the range through which the beam of radiation is scanned or swept. This range is illustrated by lines **315** and lines **305.** Lines **315** represent the range or window through which a beam produced by source **311** is swept. Lines **305** represent the range or window through which a beam produced by source **301** is swept. The subject is placed between the carriages as illustrated by marker **320** for scanning. The sources produce a beam of radiation that is swept by the chopper wheels **304** and **314**. The chopper wheels include openings **303** and **313** that allow the penetrating radiation produced by the respective sources to be emitted through the openings as the wheels move in a generally rotary motion. The rotation of the chopper wheels may include full 360 degree rotations or less. The rotation of the chopper wheels may also include an oscillating rotation or any other motion that allows the radiation to be scanned. The wheels are designed to effectively shield the radiation emitted from the source on an interval during which any of the openings **303** and **313** are not in front of the direction of radiation emission from their respective sources. As such the wheels may be constructed of lead or any other suitable material that effectively shields the radiation produced by the source used. As shown in the figure, beam **316** begins sweeping through range **315** simultaneous to chopper wheel **304** shielding radiation **302** produced by source **301**. The beams will continue to alternate being swept as the carriages are moved in a vertical direction, into or out of the plane of the page, in order to achieve a complete scan of the subject. Alternative configurations may be provided that allow different interleaved irradiation schemes.

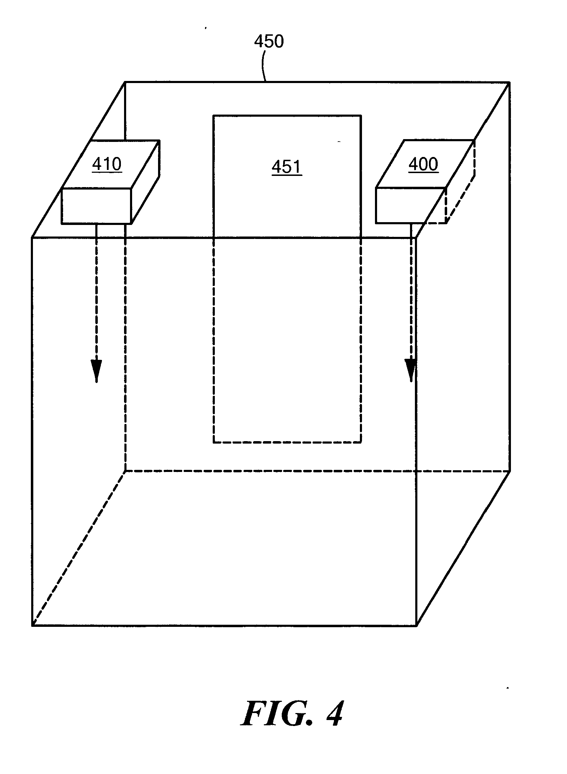

Fig. 4 is an illustration of the inspection system provided within an enclosure for containing the carriages and the at least one positioner during the course of operation. The enclosure **450** may include a portal **451** that a subject may enter for scanning. The enclosure may be provided in a mobile form. The enclosure illustrated is provided with carriages **400** and **410** that may contain the desired detector source combination required for the specific scanning application. These carriages are displaced in a generally vertical direction. The enclosure **450** may also include a stationary scatter detection system, such system **451**. The enclosure may include stationary detectors located on the top, bottom, or any other sides of the container. The information obtained from each of these detectors may be viewed or processed individually or the information may be processed and combined with the information from another detector or detectors, including the detectors located on a carriage in order to obtain greater details about a concealed object of interest located on a scanned subject. The enclosure may also include onsite inspection controls and an analysis system or the enclosure may be adapted for use with a remote analysis system. The enclosure may provide for environmental control so that the internal temperature, humidity, air pressure, microbial or contaminant content, or other environmental factor may be regulated. The enclosure may seal an interior portion of the enclosure from the surrounding outside environment.

Some embodiments of the present invention may relate to methods and systems for inspecting objects by means of penetrating radiation that use multiple x-ray sources, which may be individually activated, as described in U.S. Patent Application Publication No. 2007/0258562.

X-ray sources may be based on field-emission cathodes, offering advantages in both spatial and temporal resolution when compared with thermionic sources. Because field emission of electrons is produced by a high electric field, no heating is necessary, whence such electron emitters are commonly referred to as cold cathodes. The electron beams emitted by such devices may have low divergence and thus provide ease of focusing. Moreover, the virtually instantaneous response of the source offers time gating capabilities comparable with the time resolution of the control circuit, and may be as fast as nanoseconds, using current technology.

Zhang et al., A Multi-beam X-ray Imaging System Based on Carbon Nanotube Field Emitters, in Medical Imaging 2006, (Proceedings of SPIE, Vol. 6142, March 2, 2006), reported the fabrication, by Xintek, Inc. of Research Triangle Park, NC, of a linear array of 5 X-ray sources, each with a focal spot between 200 and 300 µm, based on the use of carbon nanotube (CNT) electrodes. Electron currents in the range of 0.1-1 mA were reported at an accelerating voltage of 40-60 kVp. The lifetime of the cold cathode was estimated to exceed 2000 hours. For an accelerating voltage of 200 kV, a beam current of 13 mA has been measured. The aforesaid Zhang et al. paper is incorporated herein by reference. Devices with 1000 pixels per meter and pulse repetition rates on 10 MHz can be envisioned with technology within the current state of the art.

The use of CNT cold cathodes in the context of an x-ray source is also described by Cheng et al., Dynamic radiography using a carbon-nanotube-based field-emission X-ray source, 75 Rev. Sci. Instruments, p. 3264 (2004), while the use of CNT cold cathode source arrays in a scanning context is described by Zhang et al., Stationary scanning x-ray source based on carbon nanotube field emitters, 86 Appl. Phys. Lett., p. 184104 (2005), both of which articles are incorporated herein by reference.

Moreover, the use of CNT cold cathode source arrays in tomography is discussed by Zhang et al., A nanotube-based field emission x-ray source for microcomputed tomography, 76 Rev. Sci. Instruments, p. 94301 (2005), which is also incorporated herein by reference.

Discrete cold cathode sources may advantageously provide for electronically turning on the sources, and with low latency (on the nanosecond scale), in a sequential manner, thereby forming pencil beams, as often practiced in the x-ray imaging arts, or, alternatively, selecting a pattern of sources at a given time to form coded beams. The development of CNTs has allowed important technical challenges related to current stability and cathode life time to be overcome.

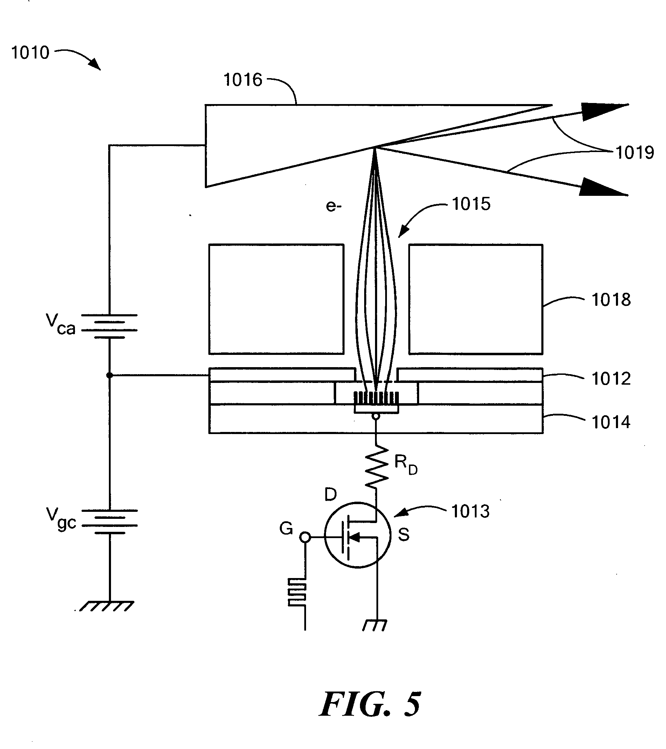

The general operation of a cold cathode x-ray source, designated generally, in Fig. 5, by numeral **1010**, is well understood in the art and is described with reference to Fig. 5. The cold cathode arrangement advantageously allows for a high degree of control. Voltage **V_{gc}** between gate **1012** and cathode **1014**, governed by control circuit **1013**, controls the current of electrons **1015**, while voltage **V_{ca}** between cathode **1014** and anode **1016**, which also serves as the X-ray target, controls the electron energy impinging on the target **1016**, and the voltage applied on the focusing electrode **1018** determines the electron beam spot size.

While Fig. 5 depicts an assembly in which the x-rays are generated via a reflection target **1019**, a transmission target may also be employed within the scope of the present invention.

Application of discrete x-ray sources for x-ray imaging, in accordance with the present invention, varies with the dimensionality of the x-ray source array (one-, two-, or three-dimensional), the scanning mode (raster or pattern), the dynamic use of different or varying energies, and the use of time gating.

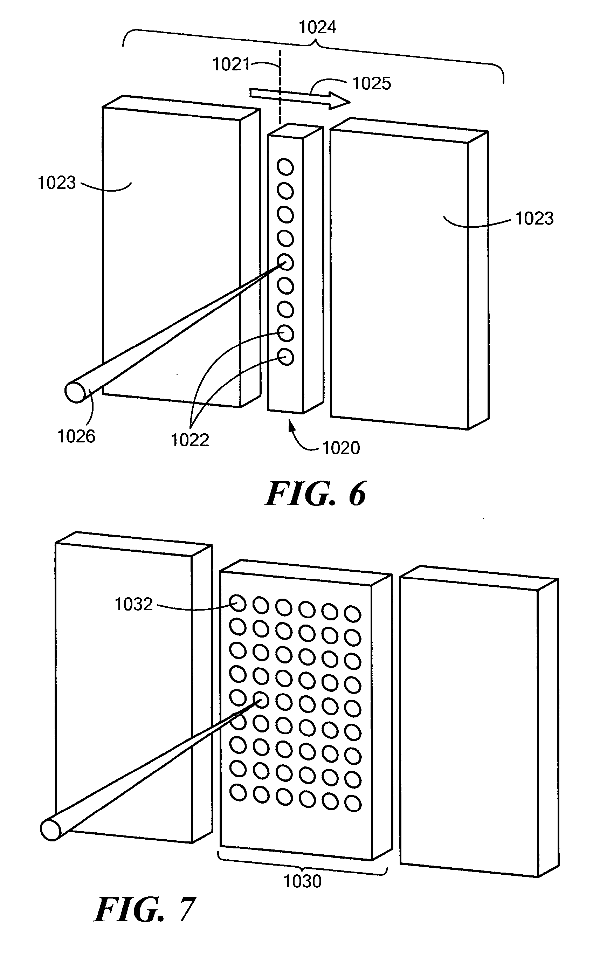

An example is described with reference to Fig. 6. A one-dimensional array **1020** of x-ray sources **1022** is disposed with backscatter detectors **1023** on one or more sides of its longitudinal (typically vertical) axis **1021**. The entire device **1024** can translate in a transverse direction **1025**, typically horizontally, so as to create an image on a line-by-line basis. Alternatively, array **1020** may rotate about longitudinal (typically vertical) axis **1021** such that x-ray beam **1026** sweeps in a transverse direction (again, typically horizontally), thereby creating a line-by-line image, but without the entire device moving. An image line is created by raster scanning the sources vertically by turning on one source **1022** at a time in rapid succession.

Referring now to Fig. 7, a two-dimensional source array **1030** may have no mechanically moving parts and allow coverage of a predefined solid angle (determined by the total number of sources **1032** and their divergence) in a very short time. It can use a raster scan mechanism similar to a CRT or pattern beams (Hadamard or other coding mechanism).

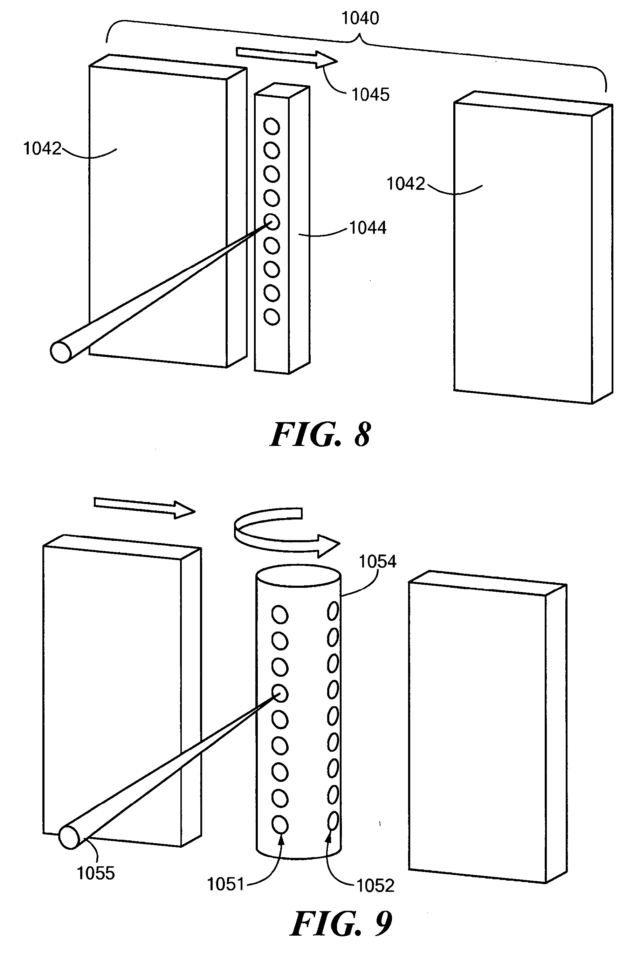

In accordance with further example of the present invention, a system with controlled velocity, designated generally by numeral **1040**, is described with reference to Fig. 8. One or more backscatter detectors **1042** are fixed, but the source array **1044** is translated with a constant speed back and forth in direction **1045** adjacent to, or between, detectors **1042**. Such system may also be employed in an interlaced mode, described below.

Further versatility may be achieved using a related examples such as that shown in Fig. 9 where two or more one-dimensional x-ray source arrays **1051**, **1052**, are mounted on a cylinder **1054**. Because the arrays can be turned on and off electronically with high speed, only the array generating an x-ray beam **1055** that is illuminating a target (not shown) is turned on, and the other arrays are off, hence there is no need to shield one array from another. The versatility of this model resides in its natural ability to incorporate the interlaced mode, as now described, and to continuously accumulate an image. Alternatively two cylinders could be provided to produce radiation incident on two sides of a subject. The sources in each array may be provided with a controller for independent activation of the sources.

Interlacing can be useful in cases where, due to technical limitations or by design, the minimum distance between two sources is 1 cm, but the required resolution for a specific applications demands sources placed 4 mm apart. On a cylinder, three one-dimensional arrays are placed at 120 degrees one from another and shifted vertically by 3.33 mm. Each array will scan lines 1 cm apart, but because of the vertical shift, the resulting image for a complete rotation of the cylinder will have a resolution of 3.33 mm. This mode of operation is referred to as "interlaced mode." For the system depicted in Fig. 8, interlaced imaging may be provided via vertical translation of the array for each horizontal pass.

In accordance with further examples of the present invention, carbon nanotube x-ray sources configured in a linear or two-dimensional are triggered sequentially as described above. Other discrete x-ray sources that currently exist or that may be developed in the future may also be employed in a substantially similar manner,

The use of x-ray source arrays of this type for this application may be particularly advantageous for the following reasons:
- The x-ray source can be very compact, especially in the dimension along the line of x-ray emission.
- Use of a linear array of x-ray beams advantageously reduces image distortion associated with single point sources.
- This approach to generating x-rays provides flexibility in image acquisition, geometry and footprint that is far superior to current single point x-ray source-based systems.
- By using sequential triggering of the linear array of x-ray sources, a backscatter image can be acquired without cross-talk between sources.
- This invention, when applied in a configuration that simultaneously captures two or more views of the person being scanned, advantageously enhances the throughput of inspected subjects.

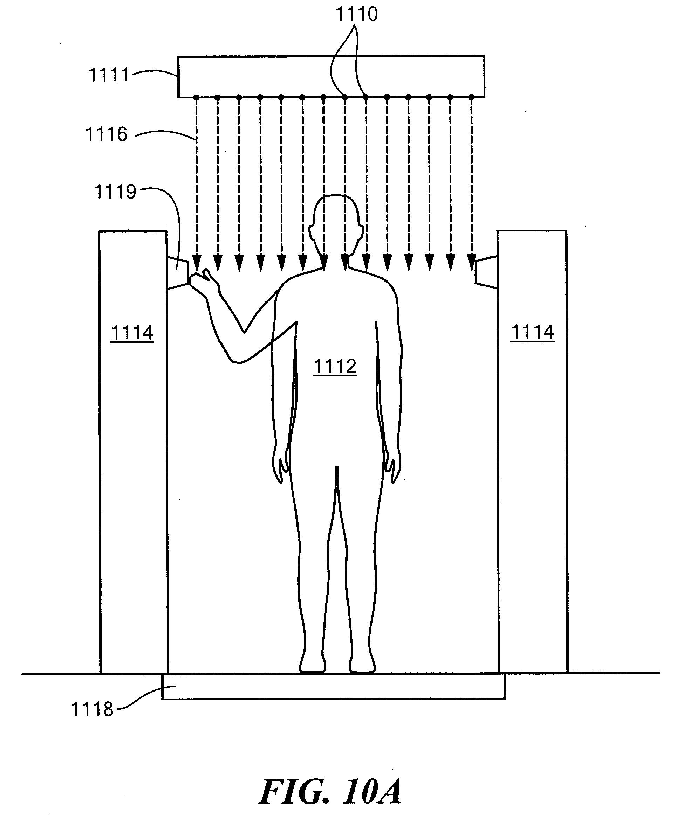

Another example is now described with reference to Fig. 10A. Sets of carbon nanotube x-ray sources **1110** configured as linear arrays **1111**, or as a two-dimensional array, are placed above (as shown) or at the sides of, a person **1112** being scanned. It is to be understood that a person is shown as a representative object of inspection, but that the apparatus and methods taught herein are of valuable applicability to any object, whether animate or inanimate.

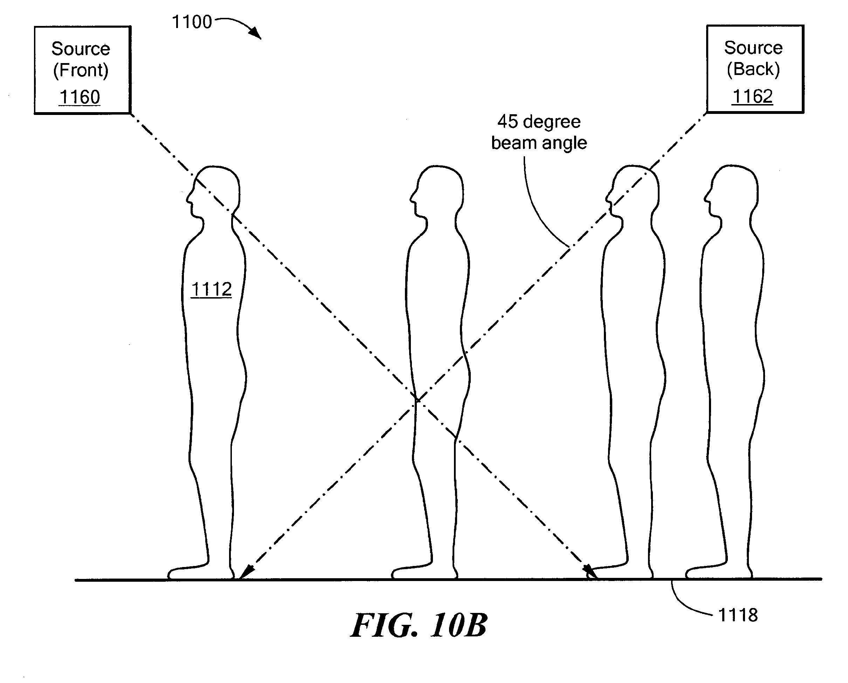

Scatter detectors **1114**, which may be backscatter or sidescatter detectors, for example, are positioned to capture scattered x-rays. The person being scanned walks through the x-ray beams **1116** or is transported through by means such as a conveyor **1118** or people mover. A hand-hold **1119** may also be provided. Separate sources **1110** may be activated sequentially to provide spatial resolution in accordance with known algorithms. Fig. 10B depicts subject **1112** in successive positions traversing an inspection station that is designated generally by numeral **1100.** Inspection station **1100** has a front source **1160** and a back source **1162**, each of which may contain linear arrays, such as source **1111** depicted in Fig. 10A, each of which is comprised of multiple discrete x-ray sources disposed along an axis transverse to the page. Subject **1112** either walks, or is conveyed by conveyor **1118**, in such a manner as to have different parts of his/her person scanned by respective sources **1160** and **1162** during the course of traversing the inspection station.

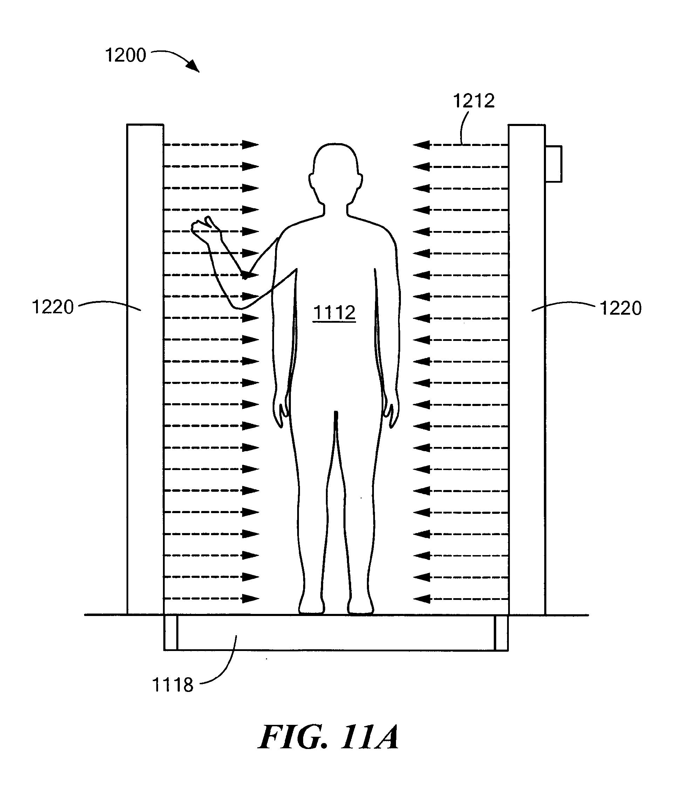

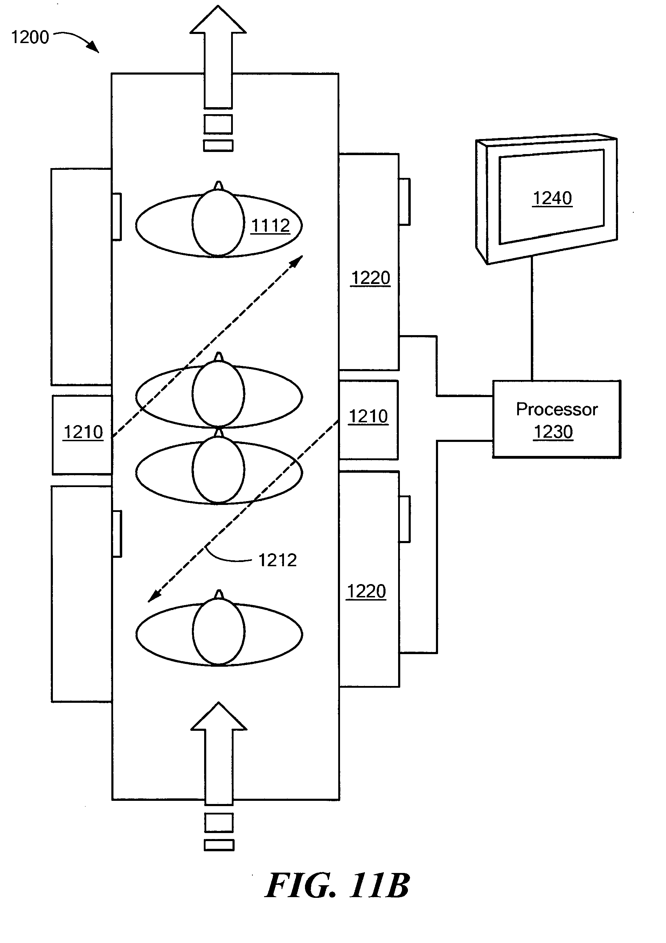

Yet a further example of the present invention is shown in Figs. 11A and 11B, in a configuration approaching that of metal detectors in current use. As shown in the top view of Fig. 11B, x-ray source arrays **1210** emit x-rays **1212**, viewed most clearly in the front view of Fig. 6A. Array **1210** may be provided as a vertically disposed array. Each source in each array may be activated independent of the other sources in the array in accordance with an embodiment of the present invention. X-rays **1212** impinge upon subject **1112** as he/she traverses the inspection station, designated generally by numeral **1200**. Radiation scattered by subject **1112** or by objects carried or worn on the subject's person is detected by scatter detectors **1220**. Scatter detectors **1220** generate scatter signals on the basis of the penetrating radiation they detect, and the scatter signals are processed by processor **1230** to detect and identify threat materials and objects in accordance with known algorithms, or, otherwise, to display a suitably processed image of the inspected subject at display monitor **1240**. In either case, an image is generated, with the term "image," as used herein and in any appended claims, signifying an ordered array of values corresponding to spatially distinct elements of the inspected object. Since the geometry minimizes distortion and shadowing of the image data, automated detection techniques that rely on shape recognition greatly benefit from the reduced image distortion and shadowing. These advantages may also be applied to conventional transmission and backscatter baggage systems.

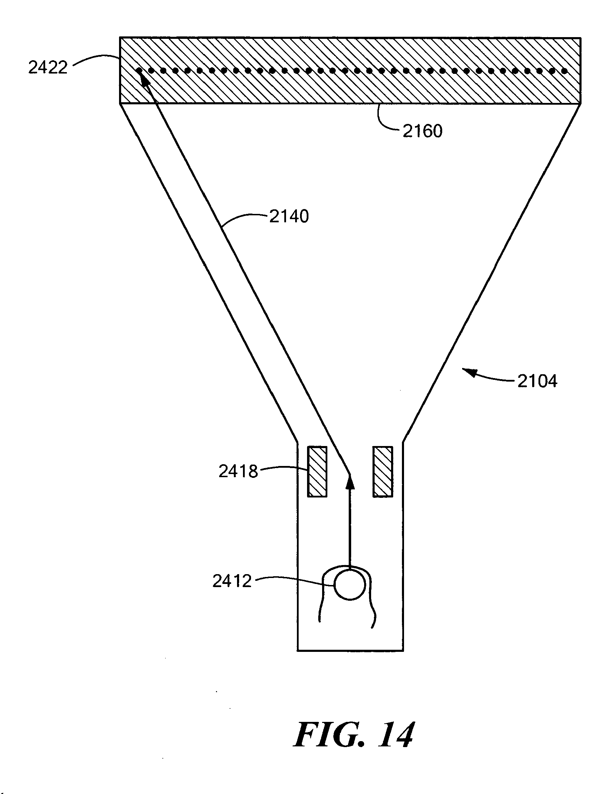

Alternatively, electromagnetic scanners may be employed, such as scanner **2104** (shown in Fig. 14) and those described in U.S. Patent No. 6,421,420, issued July 23, 2002 and entitled "Method and Apparatus for Generating Sequential Beams of Penetrating Radiation,". A source **2412** supplies a beam of charged particles **2140** that are accelerated to a surface of a target **2160**. Electromagnetic beam director **2418** can be any electromagnetic beam directing arrangement such as magnetic or electrostatic yokes. Penetrating electromagnetic radiation is emitted by target **2160** and pass through a collimator **2422** disposed a specified distance from the target, thus producing sequential parallel beams of radiation.

In cases where flying-spot systems are realized by mechanical means such as rotating hoops and chopper wheels, these aforesaid criteria may be met by synchronization of the motion of the mechanical chopper elements, biased by phase offsets. A system capable of such operation is demonstrated in U.S. Patent No. 7,400,701. Thus, for example, where collimators are rotated to define the path of emergent x-ray beam **2023**, close-loop motion controller systems known in the art may be employed to drive the rotation of the collimators. The duty cycle is controlled by setting the fan aperture (the total sweep angle of a beam, i.e., the angle between extremal beams **2023** and **2024** of a single source), equal to 2π times the duty cycle. In systems where the emitted radiation can be controlled electronically, any desired sequence of irradiation or range of sweep may be set, without limitation, entirely by electronic or software control.

By virtue of temporal sequencing which reduces or eliminates cross-talk, sources may be placed in greater proximity than otherwise possible. In particular, sources **2013**, **2015 and 2017** may be disposed in a single plane, which advantageously permits virtually simultaneous on/off control of the x-rays regardless of the speed with which the object is passing by the imagers.

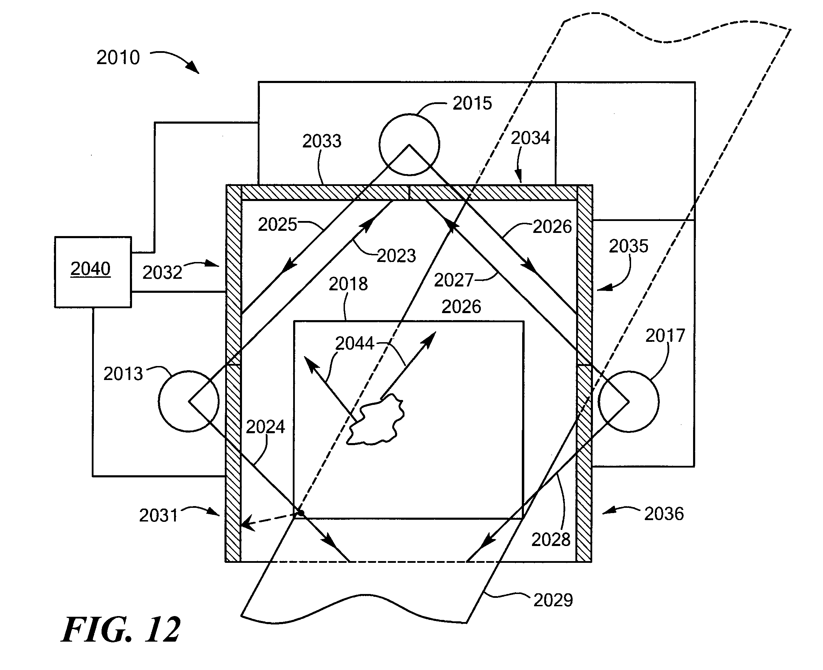

The system described may advantageously provide for an image to be derived from the perspective of each successive source **2013**, **2015 and 2017**, which emit beams **2023-2028**. Fig. 12 shows an exemplary three-view system **2010**, with beams **2023**, **2025**, etc. each sweeping trajectories that are coplanar.

The beams from each imager sweep in sequence, such that no more than one imager is emitting radiation at a time. Thus, source (or 'imager') **2013** sweeps its beam first. Radiation scattered from the object, as represented by rays **2044**, is received by all of the detectors **2031-2036** and transmitted to a processor **2040** to obtain images of the object, which may be conveyed through the system by an optional mechanized conveyor **2029**. The signals from each of the detectors are acquired as separate channels by an acquisition system. This process is repeated for each of the three imagers, creating "slices" of the object as it moves by.

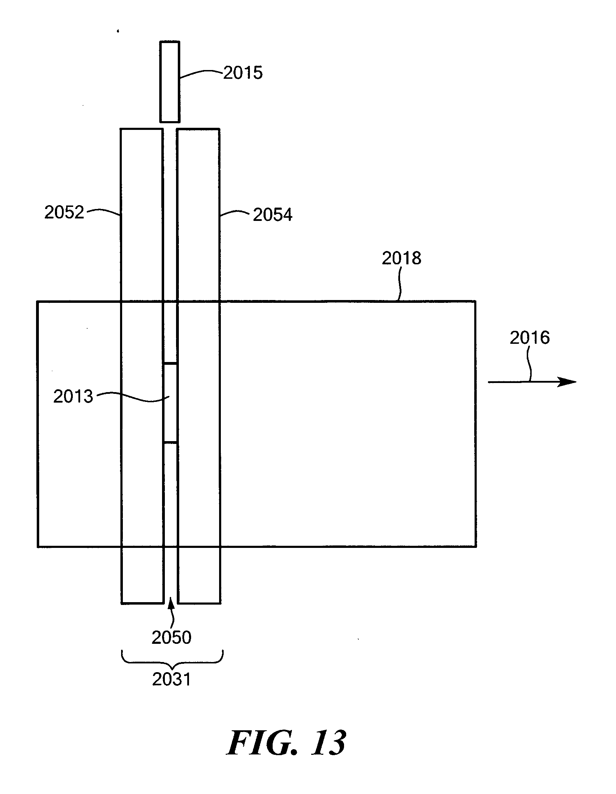

Referring now to Fig. 13, a side view is shown of the arrangement of Fig. 13, with elements designated by corresponding numbers. A slot **2050** is shown through which the beam of source **2013** passes through segments **2052** and **2054** of detector **2031** as object **2018** is scanned while moving in a lateral direction **2016**.

The signals from the detectors can be selectively used to reconstruct an image of the object. Since scattered photons **2044** detected by detectors **2033** and **2034** from source **2013** are as useful as scattered photons from source **2017**, these same detectors can be shared among all sources, and result in improved scatter collection with efficient use of the detector hardware.

Embodiments of this invention, furthermore, may advantageously allow multi-view Flying-Spot X-ray Scatter imaging to be practiced in a smaller operational footprint by eliminating cross talk, and by allowing closer positioning of the individual imagers for each view. The close positioning of these imagers (where an "imager" refers to a source, at least one detector, and associated electronics and signal processing) may also allow sharing of scatter detectors between, or among, imagers, allowing more scatter collection for improved image quality, with efficient use of detector hardware.

In applications where scanning of selective regions of the object is desired, coplanar positioning of the imagers allows simultaneous on/off control of the x-rays regardless of the speed with which the object is passing by the imagers. This greatly simplifies the design of the control of x-ray emissions from each imager in the multi-view inspection system, thus individual sequencing of x-ray emissions need not be performed as is typically practiced in systems in which emission is not co-planar.

The described embodiments of the invention are intended to be merely exemplary and numerous variations and modifications will be apparent to those skilled in the art. All such variations and modifications are intended to be within the scope of the present invention as defined in the appended claims.

## Claims

1. An apparatus for ascertaining a material feature associated with a subject, the apparatus comprising:
a first carriage and a second carriage, each carriage including a source including a collimator adapted to produce a pencil beam of penetrating x-ray radiation incident on the subject;
at least one actuator adapted to displace each carriage with respect to the subject in such a manner as to move the pencil beam with respect to the subject in a direction having a vertical component; and,
at least one detector for receiving radiation produced by the source on the first carriage after backscattering of the radiation by the subject and at least one other detector for receiving radiation produced by the source on the second carriage after backscattering of the radiation by the subject.

2. An apparatus according to claim 1, wherein the at least one actuator is adapted to synchronously displace each carriage with respect to the subject in a direction having a vertical component.

3. An apparatus according to claim 1, wherein at least a first detector of the at least one detector is coupled to the first carriage.

4. An apparatus according to claim 3, wherein at least a detector of the at least one other detector is coupled to the second carriage.

5. An apparatus according to claim 1, wherein the first carriage includes a first scanner and the second carriage includes a second scanner, each scanner associated with a corresponding one of the sources and adapted to move the pencil beam of penetrating radiation produced by the corresponding source transverse to the direction of motion of such source's carriage.

6. An apparatus according to claim 5, wherein the scanners are adapted to provide interleaved beams.

7. An apparatus according to claim 1, wherein the source included on the first carriage and the source included on the second carriage produce substantially oppositely directed pencil beams of penetrating radiation.

8. An apparatus according to claim 1, wherein each source is an intermittently irradiating source.

9. An apparatus according to claim 1, further comprising a processor for receiving a signal from the at least one detector and, if present, from the at least one other detector, and for producing an image based at least on the signal.

10. A method for inspecting a subject comprising:
moving a first carriage, the first carriage having coupled to it a first source including a collimator adapted to produce a first pencil beam of penetrating radiation incident on the subject, the first carriage moved in such a manner as to scan the first pencil beam of penetrating radiation in a direction having a vertical component;
moving a second carriage, the second carriage having coupled to it a second source including a collimator adapted to produce a second pencil beam of penetrating radiation incident on the subject, the second carriage moved in such a manner as to scan the second pencil beam of penetrating radiation in a direction having a vertical component;
detecting with at least one detector radiation backscattered by the subject from the source on the first carriage and detecting with at least one other detector radiation backscattered by the subject from the source on the second carriage, and generating detector output signals based on radiation received by the at least one detector and the at least one other detector; and,
characterizing the subject on the basis of the detector output signals.

11. A method according to claim 10, wherein the act of moving the second carriage is synchronous with the act of moving the first carriage.

12. A method according to claim 10, wherein at least a first detector of the at least one detector is coupled to the first carriage.

13. A method according to claim 12, wherein at least a detector of the at least one other detector is coupled to the second carriage.

14. A method according to claim 10, further comprising moving the first and the second carriages in respective directions, each of the respective directions having a vertical component.

15. A method according to claim 10, further comprising creating an image based on radiation detected by the at least one detector and, if present, the at least one other detector.

16. A method according to claim 10, further comprising:
scanning the second pencil beam of penetrating radiation produced by the source coupled to the second carriage in a direction transverse to the direction of motion of the carriages;
generating detector output signals based on radiation received by the at least one detector and, if present, the at least one other detector; and
creating an image based on radiation detected from the first pencil beam and the second pencil beam.

## Patentansprüche

1. Vorrichtung zum Bestimmen eines Materialmerkmals, das mit einem Objekt in Zusammenhang steht, wobei die Vorrichtung Folgendes umfasst:
ein erstes Fahrwerk und ein zweites Fahrwerk, wobei jedes Fahrwerk eine Quelle beinhaltet, die einen Kollimator beinhaltet, der dafür eingerichtet ist, einen Nadelstrahl eindringender Röntgenstrahlung zu erzeugen, die auf das Objekt fällt,
mindestens ein Betätigungselement, das dafür eingerichtet ist, jedes Fahrwerk im Verhältnis zum Objekt derart zu verlagern, das sich der Nadelstrahl im Verhältnis zum Objekt in eine Richtung bewegt, die eine vertikale Komponente aufweist, und
mindestens einen Detektor zum Empfangen von Strahlung, die durch die Quelle auf dem ersten Fahrwerk erzeugt wurde, nach der Rückstreuung der Strahlung durch das Objekt und mindestens einen weiteren Detektor zum Empfangen von Strahlung, die durch die Quelle auf dem zweiten Fahrwerk erzeugt wurde, nach der Rückstreuung der Strahlung durch das Objekt.

2. Vorrichtung nach Anspruch 1, wobei das mindestens eine Betätigungselement dafür eingerichtet ist, jedes Fahrwerk im Verhältnis zum Objekt gleichzeitig in eine Richtung mit einer vertikalen Komponente zu verlagern.

3. Vorrichtung nach Anspruch 1, wobei mindestens ein erster Detektor des mindestens einen Detektors an das erste Fahrwerk gekoppelt ist.

4. Vorrichtung nach Anspruch 3, wobei mindestens ein Detektor des mindestens einen weiteren Detektors an das zweite Fahrwerk gekoppelt ist.

5. Vorrichtung nach Anspruch 1, wobei das erste Fahrwerk einen ersten Scanner beinhaltet und das zweite Fahrwerk einen zweiten Scanner beinhaltet, wobei jeder Scanner einer entsprechenden der Quellen zugeordnet und dafür eingerichtet ist, den Nadelstrahl eindringender Strahlung, der durch die entsprechende Quelle erzeugt wurde, senkrecht zur Bewegungsrichtung des Fahrwerks dieser Quelle zu bewegen.

6. Vorrichtung nach Anspruch 5, wobei die Scanner dafür eingerichtet sind, überlappende Strahlen bereitzustellen.

7. Vorrichtung nach Anspruch 1, wobei die im ersten Fahrwerk enthaltene Quelle und die im zweiten Fahrwerk enthaltene Quelle im Wesentlichen entgegengesetzt ausgerichtete Nadelstrahlen eindringender Strahlung erzeugen.

8. Vorrichtung nach Anspruch 1, wobei jede Quelle eine unterbrochen strahlende Quelle ist.

9. Vorrichtung nach Anspruch 1, ferner einen Prozessor zum Empfangen eines Signals von dem mindestens einen Detektor umfassend und, falls vorhanden, von dem mindestens einen weiteren Detektor und zum Erzeugen eines Bildes, das mindestens auf dem Signal basiert.

10. Verfahren zur Untersuchung eines Objekts, Folgendes umfassend:
Bewegen eines ersten Fahrwerks, wobei an das erste Fahrwerk eine erste Quelle gekoppelt ist, die einen Kollimator beinhaltet, der dafür eingerichtet ist, einen ersten Nadelstrahl eindringender Röntgenstrahlung zu erzeugen, die auf das Objekt fällt, wobei das erste Fahrwerk derart bewegt wird, dass der erste Nadelstrahl eindringender Strahlung in eine Richtung mit einer vertikalen Komponente scannt,
Bewegen eines zweiten Fahrwerks, wobei an das zweite Fahrwerk eine zweite Quelle gekoppelt ist, die einen Kollimator beinhaltet, der dafür eingerichtet ist, einen zweiten Nadelstrahl eindringender Röntgenstrahlung zu erzeugen, die auf das Objekt fällt, wobei das zweite Fahrwerk derart bewegt wird, dass der zweite Nadelstrahl eindringender Strahlung in eine Richtung mit einer vertikalen Komponente scannt,
Erkennen von Strahlung von der Quelle auf dem ersten Fahrwerk, die durch das Objekt rückgestreut wird, mit mindestens einem Detektor und Erkennen von Strahlung von der Quelle auf dem zweiten Fahrwerk, die durch das Objekt rückgestreut wird, mit mindestens einem weiteren Detektor und Erzeugen von Detektorausgabesignalen, die auf einer Strahlung basieren, die durch den mindestens einen Detektor und den mindestens einen weiteren Detektoren empfangen wird, und
Beschreiben des Subjekts auf der Basis der Detektorausgabesignale.

11. Verfahren nach Anspruch 10, wobei der Vorgang des Bewegens des zweiten Fahrwerks gleichzeitig mit dem Vorgang des Bewegens des ersten Fahrwerks erfolgt.

12. Verfahren nach Anspruch 10, wobei mindestens ein erster Detektor des mindestens einen Detektors an das erste Fahrwerk gekoppelt ist.

13. Verfahren nach Anspruch 12, wobei mindestens ein Detektor des mindestens einen weiteren Detektors an das zweite Fahrwerk gekoppelt ist.

14. Verfahren nach Anspruch 10, ferner das Bewegen des ersten und des zweiten Fahrwerks in entsprechende Richtungen umfassend, wobei jede der entsprechenden Richtungen eine vertikale Komponente aufweist.

15. Verfahren nach Anspruch 10, ferner das Erzeugen eines Bildes umfassend, das auf einer Strahlung basiert, die durch den mindestens einen Detektor und, wenn vorhanden, durch den mindestens einen weiteren Detektor erkannt wurde.

16. Verfahren nach Anspruch 10, ferner Folgendes umfassend.
Scannen des zweiten Nadelstrahles eindringender Strahlung, die durch die Quelle erzeugt wurde, die an das zweite Fahrwerk gekoppelt ist, in einer Richtung, die senkrecht zur Bewegungsrichtung der Fahrwerke liegt,
Erzeugen von Detektorausgabesignalen, basierend auf Strahlung, die durch den mindestens einen Detektor und, wenn vorhanden, durch den mindestens einen weiteren Detektor empfangen wurde, und
Erzeugen eines Bildes, basierend auf Strahlung, die aus dem ersten Nadelstrahl und dem zweiten Nadelstrahl erkannt wurde.

## Revendications

1. Appareil permettant de s'assurer d'une particularité de matériau associé à un sujet, l'appareil comprenant :
un premier chariot et un second chariot, chaque chariot comprenant une source contenant un collimateur adapté pour produire un faisceau étroit de rayonnement de rayons X pénétrant incident sur le sujet ;
au moins un actionneur adapté pour déplacer chaque chariot par rapport au sujet de façon à déplacer le faisceau étroit par rapport au sujet dans une direction ayant une composante verticale ; et,
au moins un détecteur permettant de recevoir un rayonnement produit par la source sur le premier chariot après rétrodiffusion du rayonnement par le sujet et au moins un autre détecteur permettant de recevoir un rayonnement produit par la source sur le second chariot après rétrodiffusion du rayonnement par le sujet.

2. Appareil selon la revendication 1, dans lequel le au moins un actionneur est adapté pour déplacer de façon synchrone chaque chariot par rapport au sujet dans une direction ayant une composante verticale.

3. Appareil selon la revendication 1, dans lequel au moins un premier détecteur du au moins un détecteur est couplé au premier chariot.

4. Appareil selon la revendication 3, dans lequel au moins un détecteur du au moins un autre détecteur est couplé au second chariot.

5. Appareil selon la revendication 1, dans lequel le premier chariot comprend un premier scanner et le second chariot comprend un second scanner, chaque scanner étant associé à l'une correspondante des sources et adapté pour déplacer le faisceau étroit de rayonnement pénétrant produit par la source correspondante transversalement à la direction de mouvement du chariot d'une telle source.

6. Appareil selon la revendication 5, dans lequel les scanners sont adaptés pour fournir des faisceaux entrelacés.

7. Appareil selon la revendication 1, dans lequel la source contenue sur le premier chariot et la source contenue sur le second chariot produisent des faisceaux étroits dirigés de façon sensiblement opposée de rayonnement pénétrant.

8. Appareil selon la revendication 1, dans lequel chaque source est une source d'irradiation intermittente.

9. Appareil selon la revendication 1, comprenant en outre un processeur permettant de recevoir un signal en provenance du au moins un détecteur et, le cas échéant, en provenance du au moins un autre détecteur, et pour produire une image basée au moins sur le signal.

10. Procédé d'inspection d'un sujet comprenant :
le déplacement d'un premier chariot, le premier chariot étant couplé à une première source contenant un collimateur adapté pour produire un premier faisceau étroit de rayonnement pénétrant incident sur le sujet, le premier chariot étant déplacé de façon à balayer le premier faisceau étroit de rayonnement pénétrant dans une direction ayant une composante verticale ;
le déplacement d'un second chariot, le second chariot étant couplé à une seconde source contenant un collimateur adapté pour produire un second faisceau étroit de rayonnement pénétrant incident sur le sujet, le second chariot étant déplacé de façon à balayer le second faisceau étroit de rayonnement pénétrant dans une direction ayant une composante verticale ;
la détection avec au moins un détecteur d'un rayonnement rétrodiffusé par le sujet en provenance de la source du premier chariot et la détection avec au moins un autre détecteur d'un rayonnement rétrodiffusé par le sujet en provenance de la source sur le second chariot, et la génération de signaux de sortie de détecteur basés sur un rayonnement reçu par le au moins un détecteur et le au moins un autre détecteur ; et
la caractérisation du sujet sur la base des signaux de sortie de détecteur.

11. Procédé selon la revendication 10, dans lequel l'acte de déplacement du second chariot est synchrone avec l'acte de déplacement du premier chariot.

12. Procédé selon la revendication 10, dans lequel au moins un détecteur du au moins un détecteur est couplé au premier chariot.

13. Procédé selon la revendication 12, dans lequel au moins un détecteur du au moins un autre détecteur est couplé au second chariot.

14. Procédé selon la revendication 10, comprenant en outre le déplacement des premier et second chariots dans des directions respectives, chacune des directions respectives ayant une composante verticale.

15. Procédé selon la revendication 10, comprenant en outre la création d'une image basée sur un rayonnement détecté par le au moins un détecteur et, le cas échéant, le au moins un autre détecteur.

16. Procédé selon la revendication 10, comprenant en outre :
le balayage du second faisceau étroit de rayonnement pénétrant produit par la source couplé au second chariot dans une direction transversale à la direction de mouvement des chariots ;
la génération de signaux de sortie de détecteur basés sur le rayonnement reçu par le au moins un détecteur et, le cas échéant, le au moins un autre détecteur ; et
la création d'une image basée sur le rayonnement détecté à partir du premier faisceau étroit et du second faisceau étroit.
